# EUROPÄISCHE PATENTSCHRIFT

(11) **EP 4 165 313 B1**
(45) Veröffentlichungstag und Bekanntmachung des Hinweises auf die Patenterteilung: **03.07.2024**
(21) Anmeldenummer: 21727370.5
(22) Anmeldetag: 28.04.2021
(51) Int. Cl.: F04F 5/16, F04F 5/46, F04F 5/44, H01M 8/04089, H01M 8/04223

(54) **FÖRDERAGGREGAT FÜR EIN BRENNSTOFFZELLEN-SYSTEM ZUR FÖRDERUNG UND/ODER STEUERUNG EINES GASFÖRMIGEN MEDIUMS**
DELIVERY UNIT FOR A FUEL CELL SYSTEM FOR THE DELIVERY AND/OR CONTROL OF A GASEOUS MEDIUM
UNITÉ DE REFOULEMENT POUR UN SYSTÈME DE PILES À COMBUSTIBLE POUR LE REFOULEMENT ET/OU LA RÉGULATION D'UN MILIEU GAZEUX

(30) Priorität: 10.06.2020 DE 102020207269
(43) Veröffentlichungstag der Anmeldung: 19.04.2023
(73) Patentinhaber: Robert Bosch GmbH, 70442 Stuttgart (DE)
(72) Erfinder: RICHTER, Armin, 70771 Leinfelden-Echterdingen (DE)
(86) Internationale Anmeldenummer: PCT/EP2021/061071
(87) Internationale Veröffentlichungsnummer: WO 2021/249690

(56) Entgegenhaltungen:
- WO-A1-2013/088355
- WO-A1-2020/071157
- AU-B2- 2002 325 650
- DE-A1-102018 213 313
- DE-B3-102018 216 299
- GB-A- 2 207 952
- GB-A- 2 384 027
- US-A1- 2015 214 566
- US-A1- 2015 292 524
- US-A1- 2017 244 119

## Beschreibung

### Stand der Technik

Die vorliegende Erfindung betrifft ein Förderaggregat für ein Brennstoffzellen-System zur Förderung und/oder Steuerung eines gasförmigen Mediums, insbesondere Wasserstoff, das insbesondere zur Anwendung in Fahrzeugen mit einem Brennstoffzellenantrieb vorgesehen ist.

Im Fahrzeugbereich spielen neben flüssigen Kraftstoffen in Zukunft auch gasförmige Kraftstoffe eine zunehmende Rolle. Insbesondere bei Fahrzeugen mit Brennstoffzellenantrieb müssen Wasserstoffgasströme gesteuert werden. Die Gasströme werden hierbei nicht mehr diskontinuierlich wie bei der Einspritzung von flüssigem Kraftstoff gesteuert, sondern es wird das Gas aus mindestens einem Tank, insbesondere einem Hochdrucktank, entnommen und über eine Zuströmleitung eines Mitteldruckleitungssystem an eine Ejektoreinheit geleitet. Diese Ejektoreinheit führt das Gas über eine Verbindungsleitung eines Niederdruckleitungssystems zu einer Brennstoffzelle.

Aus der DE102018213313 ist ein Förderaggregat für ein Brennstoffzellen-System zur Förderung und/oder Steuerung eines gasförmigen Mediums, insbesondere Wasserstoff, bekannt. Dabei weist das Förderaggregat zumindest eine von einem Treibstrahl eines unter Druck stehenden gasförmigen Mediums angetriebenen Strahlpumpe auf, wobei ein Ausgang des Förderaggregats mit einem Anodeneingang einer Brennstoffzelle fluidisch verbunden ist. Dabei ist in einem Grundkörper der Strahlpumpe eine Düse angeordnet, wobei der Grundkörper der Strahlpumpe einen Ansaugbereich, ein Mischrohr und einen Diffusorbereich aufweist und vom gasförmigen Medium in einer Strömungsrichtung durchströmt wird, die parallel zu einer Längsachse der Strahlpumpe verläuft.

Aus der US 2017/0244119 A1 ist eine Brenngas-Zirkulationsvorrichtung bekannt, in der ein Injektor zum Einspritzen eines Brenngases in eine Befestigungsbohrung eines Körpers eingesetzt wird.

In der WO 2020/071157 A1 ist ein Ejektor gezeigt, der eine Düse zum Ausstoßen eines Wasserstoffgases aufweist, wobei die Düse eine inneren Düse und eine äußere Düse umfasst, beide der Düsen angeordnet sind, um eine Achse L1 eines Diffusors zu umschließen, eine Achse L2 der inneren Düse oder eine Achse L3 der äußeren Düse angeordnet ist, um mit der Achse L1 zu fluchten.

Aus der GB 2 207 952 A ist eine Vorrichtung bekannt, zum Mischen einer ersten Flüssigkeit mit einer zweiten Flüssigkeit, wobei die Vorrichtung eine Kammer umfasst, der die erste Flüssigkeit zugeführt werden kann, wobei die Vorrichtung einen Ejektor umfasst, der eine Düse und einen koaxialen Hals und einen Einlass umfasst, der sich zwischen der Kammer und dem Hals öffnet, und einen Diffusor, der aus dem Hals führt.

In der GB 2 384 027 A ist ein Ejektor gezeigt, umfassend ein Gehäuse mit einem ersten Einlass, der in Fluidverbindung mit einem ersten Versorgungspfad eines Fluids mit einem ersten Druck, einem Auslass für das Fluid und einem zweiten Einlass, der in Fluidverbindung mit einem zweiten Versorgungspfad mit einem Fluid mit einem zweiten Druck steht, wobei der erste Druck höher ist als der zweite Druck.

Aus der US 2015/0292524 A1 ist eine Strahlpumpe bekannt, wobei die Strahlpumpe ein längliches rohrförmiges Gehäuse aufweist, wobei das Gehäuse eine Längsachse A, ein stromaufwärts gerichtetes erstes Ende und ein stromabwärts gelegenes zweites Ende aufweist.

In der WO 2013/088355 A1 ist ein Mehrphasen-Ejektor gezeigt, der einen Gehäuseraum mit einer ersten Einlassöffnung und einer zweiten Einlassöffnung und einer Auslassöffnung aufweist, wobei die erste Einlassöffnung mit einer ersten Fluid-Quelle verbindbar ist und die zweite Einlassöffnung mit einer zweiten Fluid-Quelle verbindbar ist.

Aus der DE 10 2018 216 299 B3 ist ein Förderaggregat bekannt für ein Brennstoffzellen-System zur Förderung und/oder Rezirkulation eines gasförmigen Mediums, insbesondere Wasserstoff, mit einer von einem Treibstrahl des unter Druck stehenden gasförmigen Mediums angetriebenen Strahlpumpe und einem Dosierventil mit einer Düse, wobei das Förderaggregat als eine kombinierte Ventil-Strahlpumpenanordnung ausgeführt ist, wobei das gasförmige Medium der Strahlpumpe mittels des Dosierventils zugeführt wird, wobei die Strahlpumpe einen Grundkörper wobei die Strahlpumpe mit einem Anodeneingang einer Brennstoffzelle verbunden ist.

Das aus der DE102018213313 bekannte Förderaggregat kann gewisse Nachteile aufweisen.

Durch unterschiedlichen Kundenanforderungen aufgrund variierender Brennstoffzellengrößen und Brennstoffzellenleistungen können unterschiedliche Größen der Strahlpumpe hinsichtlich der geometrische Ausformung der inneren Strömungskontur notwendig sein, insbesondere im Bereich des Mischrohr, wie beispielsweise Mischrohrradius und/oder Mischrohrlänge, aber auch in den angrenzenden Strömungsbereichen des Ansaugbereichs und/oder des Diffusorbereichs. Diese spezifischen und unterschiedlichen Kundenanforderungen erzeugen eine hohe Variantenvielfalt in Bezug auf die Einzelteilebene, insbesondere bezüglich des Grundkörpers des Förderaggregats, aber auch der Baugruppenebene bis hin zum gesamten Förderaggregat. Dadurch ergeben sich Kostennachteile durch einen hohen Logistikaufwand, Fertigungsaufwand, hohe Rüstkosten, kleine Chargen sowie Variantenbildung am Beginn der Wertschöpfungskette.

### Offenbarung der Erfindung

Erfindungsgemäß wird ein Förderaggregat für ein Brennstoffzellen-System zur Förderung und/oder Steuerung eines gasförmigen Mediums, insbesondere Wasserstoff, mit einer von einem Treibstrahl eines unter Druck stehenden gasförmigen Mediums angetriebenen Strahlpumpe, wobei ein Ausgang des Förderaggregats mit einem Anodeneingang einer Brennstoffzelle fluidisch verbunden ist, wobei die Strahlpumpe einen Ansaugbereich, ein Mischrohr und einen Diffusorbereich aufweist und vom gasförmigen Medium in einer Strömungsrichtung III durchströmt wird, die parallel zu einer Längsachse der Strahlpumpe verläuft und wobei der Diffusorbereich mit dem Anodeneingang der Brennstoffzelle zumindest mittelbar fluidisch verbunden ist.

Bezugnehmend auf Anspruch 1 bietet die erfindungsgemäße Ausgestaltung des Förderaggregats den Vorteil, dass die Strahlpumpe eine Gehäuse-Baugruppe aufweist, wobei die Gehäuse-Baugruppe die Bauteile Grundkörper und Mischrohr-Einsatz aufweist, wobei der Mischrohr-Einsatz derart austauschbar ist, insbesondere bei der Montage, dass mindestens zwei Mischrohr-Einsätze im Grundkörper verbaubar sind. Auf diese Weise kann der Vorteil erzielt werden, dass bei unterschiedlichen Kundenanforderungen hinsichtlich der geometrischen Ausformung der inneren Strömungskontur der Strahlpumpe die Varianz mittels des Mischrohr-Einsatz abgebildet werden kann, während der Grundkörper gleichbleibt. Dabei wird bei der Montage jeweils ein Mischrohr-Einsatz in den Grundkörper verbaut, der die jeweils geforderten Anforderungen an die Strömungsgeometrie abbildet. Der Grundkörper bleibt hinsichtlich seiner geometrischen Ausformung gleich unabhängig von der Kundenanforderung. Somit kann man für unterschiedliche Kundenanforderungen und/oder geometrische Ausformungen der inneren Strömungskontur der Strahlpumpe ein identischer Grundkörper der Strahlpumpe verwendet werden. Auf diese Weise lässt sich die Variantenvielfalt in Bezug auf die Einzelteilebene, insbesondere bezüglich des Grundkörpers des Förderaggregats, aber auch der Baugruppenebene bis hin zum gesamten Förderaggregat reduzieren. Dadurch lässt sich der Vorteil erzielen, dass der Logistikaufwand und/oder Fertigungsaufwand reduziert werden kann, wodurch Logistikkosten und/oder Fertigungskosten reduziert werden können. Weiterhin lassen sich Rüstkosten reduzieren, da die Chargen für den Grundkörper erhöht werden. Dabei können die Kosten des gesamten Förderaggregats reduziert werden, während zudem die Fertigungszeit und/oder Produktionszeit des jeweiligen Förderaggregats reduziert werden kann. Des Weiteren ist das Förderaggregat gemäß der erfindungsgemäßen Ausgestaltung nach Anspruch 1 derart ausgeführt, dass sich ein Heizelement zwischen dem Grundkörper und dem Mischrohr-Einsatz befindet. Auf diese Weise lässt sich eine verbesserte Kaltstartprozedur der Strahlpumpe und/oder des gesamten Förderaggregats erzielen, indem bei langen Standzeiten des Gesamtfahrzeugs und/oder des Brennstoffzellensystems bei niedrigen Temperaturen unter 0°C, bei dem möglicherweise vorhandenes Wasser im gasförmigen Medium im Bereich der inneren Strömungskonturen Eis und/oder Eisbrücken ausbilden kann. Dabei kann es zur Schädigung der strömungsrelevanten Oberflächen der Strahlpumpe und/oder nachgelagerten und weiteren Komponenten der Strahlpumpe kommen, indem die scharfkantigen Eisbrücken die Oberflächen beschädigen. Mittels des Heizelements können die Eisbrücken während einer Kaltstartprozedur abgeschmolzen und somit eliminiert werden, bevor das Förderaggregat und das gesamte Brennstoffzellensystem in Betrieb genommen wird. Auf diese Weise kann die Ausfallwahrscheinlichkeit des Förderaggregats reduziert werden, beispielsweise durch reduzierte Eisbrücken im System oder den Bauteilen, und es kann die Lebensdauer des Förderaggregats erhöht werden.

Die Unteransprüche betreffen bevorzugte Weiterbildungen der Erfindung.

Gemäß einer vorteilhaften Ausgestaltung des Förderaggregats bilden die Bauteile Grundkörper und Mischrohr-Einsatz zusammen zumindest teilweise die Strömungsbereiche Ansaugbereich, Mischrohr und Diffusorbereich im Inneren der Strahlpumpe aus. Auf diese Weise kann zumindest nahezu der Teil der inneren Strömungskontur der Strahlpumpe durch den Grundkörper und den Mischrohr-Einsatz abgebildet werden, wodurch die Fertigungskosten reduziert werden können, da die Geometrie der Strömungskontur nur in diesen beiden Bauteile ausgeformt werden muss mittels eines Fertigungsprozesses. Die erfindungsgemäße Ausformung des Mischrohr-Einsatzes bietet den Vorteil, dass die Fertigungskosten für dieses Bauteil stark reduziert werden können, da es sich mittels kostengünstiger Verfahren, wie beispielsweise das Drehverfahren, herstellen lässt. Auf diese Weise lassen sich die Kosten der gesamten Fördereinrichtung reduzieren.

Gemäß einer besonders vorteilhaften Weiterbildung des Förderaggregats weisen die mindestens zwei Mischrohr-Einsätze einen unterschiedlichen Mischrohrradius und/oder eine unterschiedliche Mischrohrlänge auf, wobei die Mischrohrlänge parallel zur Längsachse verläuft und der Mischrohrradius orthogonal zur Längsachse verläuft. Auf diese Weise lässt sich der Vorteil erzielen, dass die Produktvarianz des Förderaggregats zumindest nahezu vollständig in das Bauteil Mischrohr-Einsatz verlagert wird, wodurch die Fertigungskosten und/oder Logistikkosten zur Herstellung des Förderaggregats reduziert werden können. Mittels der Möglichkeit des Einbaus von verschiedenen Mischrohr- Einsätzen mit unterschiedlichen Mischrohrradien und/oder unterschiedlichen Mischrohrlängen kann eine Vielzahl von Strömungskonturen in der Strahlpumpe und im Förderaggregat abgebildet werden, die der jeweiligen Kundenanforderung entspricht. Dabei haben Faktoren, wie benötigter Volumenstrom, Druck, idealer Betriebspunkt der Brennstoffzelle, Anzahl der Verbauten Stahlpumpen im Brennstoffzellensystem, Temperatur, Leistung des Gesamtfahrzeugs und/oder der Brennstoffzelle einen Einfluss auf den benötigten Mischrohrradius und die benötigte Mischrohrlänge. Dabei können nun unterschiedliche Kundenanforderungen an das Förderaggregat und/oder die Strahlpumpe derart realisiert werden, dass man bei der Montage einen jeweiligen passenden Mischrohr-Einsatz verbaut, während der Standard Grundkörper der Stahlpumpe beibehalten werden kann. Somit kann der Wirkungsgrad der Strahlpumpe verbessert werden, während die Gesamtkosten, insbesondere die Fertigungskosten, der Strahlpumpe und des Förderaggregats reduziert werden können.

Gemäß einer vorteilhaften Ausgestaltung des Förderaggregats weist der Grundkörper an seinem Innendurchmesser mindestens einen ersten Absatz auf und der Mischrohr-Einsatz im Bereich seines Außendurchmessers jeweils mindestens einen zweiten Absatz auf. Auf diese Weise lässt sich eine schnelle und kostengünstige Montage realisieren, indem der jeweilige benötigte Mischrohr-Einsatz in Richtung der Längsachse in den Grundkörper eingeschoben wird.

Dabei wird der Mischrohr-Einsatz orthogonal zur Längsachse derart fixiert, dass er mit seinem Außendurchmesser mit dem Innendurchmesser des Grundkörpers zumindest mittelbar in Anlage steht. In Richtung der Längsachse ist der Mischrohr-Einsatz in einer Richtung durch den zweiten Absatz fixiert, der mit dem ersten Absatz des Grundkörpers in Anlage steht. Zudem kann der Mischrohr-Einsatz vor der Montage abgekühlt werden, um dessen Außendurchmesser zu verringern und somit eine einfachere Montage zu ermöglichen.

Gemäß einer besonders vorteilhaften Ausgestaltung des Förderaggregats weist das Förderaggregat neben der Strahlpumpe ein Dosierventil auf, wodurch das Förderaggregat als eine kombinierte Ventil-Strahlpumpenanordnung ausgeführt ist. Auf diese Weise kann der Vorteil erzielt werden, dass zum einen eine möglichst kurze Strömungsverbindung zwischen dem Dosierventil und der Strahlpumpe realisiert werden kann, da sich die beiden Komponenten räumlich direkt nebeneinander in dem gemeinsamen Grundkörper befinden und/oder die Strömungsverbindung zwischen den beiden Bauteilen zumindest nahezu keine Strömungsumlenkungen aufweist. Dabei lassen sich Reibungsverluste zwischen dem gasförmigen Medium und der Strömungsleitung verringern, wodurch sich der Wirkungsgrad der Fördereinrichtung verbessern lässt. Zum anderen lässt sich durch die vorteilhafte Ausgestaltung des Förderaggregats als kombinierte Ventil-Strahlpumpenanordnung, bei dem das Dosierventil und die Strahlpumpe in und/oder an dem Grundkörper angeordnet sind, die Oberfläche der beiden Bauteile verringern, wodurch sich bessere Kaltstartfähigkeiten des Förderaggregats ergeben. Dabei kühlen die Bauteile Dosierventil und die Strahlpumpe beim Abstellen des Fahrzeugs bei niedrigen Temperaturen langsamer aus. Zudem ist ein schnelleres Aufheizen der als kombinierte Ventil-Strahlpumpenanordnung ausgeführten Bauteile Dosierventil und Strahlpumpe möglich. Auf diese Weise kann die Ausfallwahrscheinlichkeit des Förderaggregats reduziert werden, beispielsweise durch reduzierte Eisbrücken im System oder den Bauteilen, und es kann die Lebensdauer des Förderaggregats erhöht werden.

Gemäß einer vorteilhaften Ausgestaltung des Förderaggregats besteht der Grundkörper und der Mischrohr-Einsatz aus unterschiedlichen Materialien. Auf diese Weise lässt sich der Vorteil erzielen, dass das Material des Grundkörper derart gewählt wird, um die Anforderungen an Druckfestigkeit oder Korrosionsbeständigkeit zu erfüllen, wohingegen das Material des Mischrohreinsatzes derart gewählt wird, dass dieses schnell und kostengünstig bearbeitbar ist. Auf diese Weise lassen sich die Kosten der Strahlpumpe und des Förderaggregats reduzieren, indem die unterschiedlichen Anforderungen an den Grundkörper und den Mischrohr-Einsatz mittels einer unterschiedlichen Materialauswahl bestmöglich erfüllt werden können. Zudem kann somit die Lebensdauer der Strahlpumpe erhöht werden und/oder es lässt sich das Gesamtgewicht des Förderaggregats reduzieren.

Gemäß einer vorteilhaften Weiterbildung weist der Mischrohr-Einsatz eine hohe Oberflächengüte und/oder geringe Oberflächenrauhigkeit im Bereich des Strömungskanals auf. Auf diese Weise kann der Vorteil erzielt werden, dass die Reibungsverluste zwischen dem gasförmigen Medium und der inneren Strömungskontur der Strahlpumpe und/oder des Förderaggregats verringert werden können. Somit kann der Wirkungsgrad des Förderaggregats verbessert werden.

Gemäß einer besonders vorteilhaften Ausgestaltung des Förderaggregats ist der Mischrohr-Einsatz zumindest teilweise aus einem Material hergestellt, welches eine geringe Wärmekapazität und/oder eine hohe Wärmeleitfähigkeit aufweist. Auf diese Weise kann gezielt nur der Mischrohr-Einsatz bei einer Kaltstartprozedur erhitzt werden während der Grundkörper nicht komplett miterhitzt werden muss. Auf diese Weise lässt sich die Heizleistung reduzieren, da sich der Mischrohr-Einsatz schneller erwärmen lässt als der Grundkörper wodurch die Betriebskosten des Förderaggregats insbesondere bei einer Kaltstartprozedur reduziert werden können.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

### Kurze Beschreibung der Zeichnung

Anhand der Zeichnung wird die Erfindung nachstehend eingehender beschrieben.

Es zeigt:
- Figur 1: eine schematische Schnittansicht eines Förderaggregats mit einer Strahlpumpe und einem Dosierventil,
- Figur 2: einen in Figur 1 mit X bezeichneten Ausschnitt der Strahlpumpe des Förderaggregats in vergrößerter Darstellung mit einer Gehäuse-Bau-gruppe,
- Figur 3: einen in Figur 2 mit XI bezeichneten Ausschnitt der Gehäuse-Bau-gruppe mit den Bauteilen Grundkörper, Mischrohr-Einsatz, Heizelement und der Dichtelemente
- Figur 4: eine schematische Darstellung einer erfindungsgemäßen Brennstoffzellenanordnung mit einer Brennstoffzelle und dem Förderaggregat,

### Ausführungsformen der Erfindung

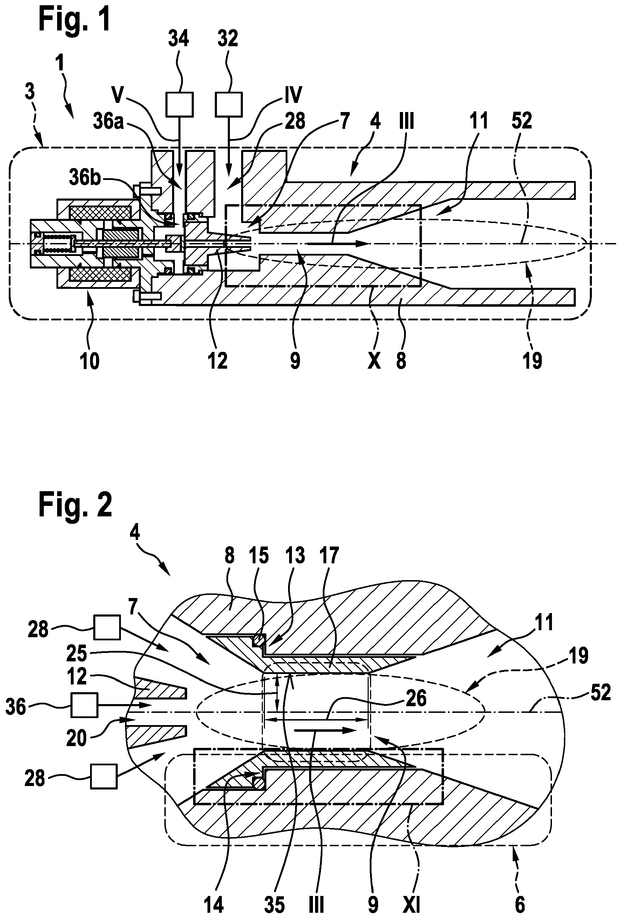

Die Darstellung gemäß **Fig.** 1 zeigt eine schematische Schnittansicht eines Förderaggregats 1, wobei das Förderaggregat 1 eine kombinierte Ventil-Strahlpumpenanordnung 3 aufweist. Die kombinierte Ventil-Strahlpumpenanordnung 3 weist dabei ein Dosierventil 10 und eine Strahlpumpe 4 auf, wobei das Dosierventil 10 beispielsweise mittels einer Verschraubung mit der Strahlpumpe 4 verbunden ist, insbesondere mit einem Grundkörper 8 der Strahlpumpe 4.

Dabei weist die Strahlpumpe 4 einen ersten Zulauf 28, einen zweiten Zulauf 36a einen Ansaugbereich 7, ein Mischrohr 9 und einen Diffusorbereich 11 auf. Das Dosierventil 10 weist dabei den zweiten Zulauf 36b und eine Düse 12 auf. Dabei ist das Dosierventil 10 insbesondere in Richtung einer Längsachse 52 in die Strahlpumpe 4, insbesondere in eine Öffnung in dem Grundkörper 8 der Strahlpumpe 4 eingeschoben.

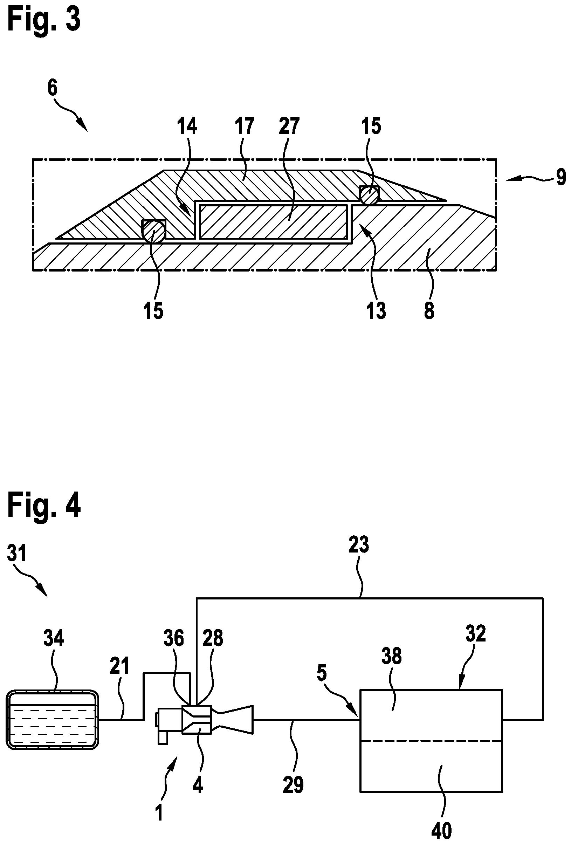

In **Fig.** 1 ist zudem dargestellt, dass die kombinierte Ventil-Strahlpumpenanordnung 3 von einem zu fördernden Medium in einer Strömungsrichtung III durchströmt wird. Der Großteil der durchströmten Bereiche der Ventil-Strahlpumpenanordnung 3 sind dabei zumindest annährend rohrförmig ausgebildet und dienen zum Fördern und/oder Leiten des gasförmigen Mediums, bei dem es sich insbesondere um H₂ mit Anteilen an H₂O und N₂ handelt, in dem Förderaggregat 1. Dabei durchströmt das gasförmige Medium einen zentralen Strömungsbereich 19 im Inneren des Grundkörpers 8 parallel zur Längsachse 52 in der Strömungsrichtung III, wobei der zentrale Strömungsbereich 19 im Bereich der Mündung der Düse 12 im Ansaugbereich 7 beginnt und sich durch das Mischrohr 9 bis in den Diffusorbereich 11 und beispielsweise darüber hinaus erstreckt, insbesondere in einem Bereich mit einem zumindest nahezu gleichbleibenden Durchmesser eines Strömungsquerschnitts des Förderaggregats 1. Dabei wird der Ventil-Strahlpumpenanordnung 3 zum einen ein Rezirkulat durch den ersten Zulauf 28 zugeführt, wobei es sich bei dem Rezirkulat insbesondere um das unverbrauchte H₂ aus einem Anodenbereich 38 (gezeigt in Fig. 4) einer Brennstoffzelle 32, insbesondere einem Stack, handelt, wobei das Rezirkulat auch Wasser und Stickstoff aufweisen kann. Das Rezirkulat strömt dabei auf einem ersten Strömungspfad IV in die Ventil-Strahlpumpenanordnung 3 ein. Zum anderen strömt durch den zweiten Zulauf 36 auf einem zweiten Strömungspfad V von außerhalb der Ventil-Strahlpumpenanordnung 3 ein gasförmiges Treibmedium, insbesondere H₂, in eine Öffnung der Ventil-Strahlpumpenanordnung 3 und/oder in den Grundkörper 8 und/oder das Dosierventil 10 ein, wobei das Treibmedium von einem Tank 34 kommen kann und unter hohen Druck, insbesondere von mehr als 5 bar, steht. Dabei verläuft der zweite Zulauf 36a, b durch die Bauteile Grundkörper 8 und/oder Dosierventil 10. Vom Dosierventil 10 wird das Treibmedium mittels einer Aktorik und eines vollständig schließbaren Ventilelements, insbesondere stoßweise, durch die Düse 12 in den Ansaugbereich 7 und/oder das Mischrohr 9 abgelassen. Das durch die Düse 12 strömende und als Treibmedium dienende H₂ weist eine Druckdifferenz und/oder Geschwindigkeitsdifferenz zum Rezirkulationsmedium auf, das aus dem ersten Zulauf 28 in das Förderaggregat 1 einströmt, wobei das Treibmedium insbesondere einen höheren Druck von mindestens 5 bar aufweist. Wenn sich ein sogenannter Strahlpumpeneffekt einstellt wird das Rezirkulationsmedium mit einem geringen Druck in den zentralen Strömungsbereich 19 des Förderaggregats 1 gefördert, beispielsweise durch den Einsatz eines, dem Förderaggregat 1 vorgeschalteten, Seitenkanalverdichters. Dabei strömt das Treibmedium mit der beschriebenen Druckdifferenz und einer hohen Geschwindigkeit, die insbesondere nahe der Schallgeschwindigkeit liegen kann, durch die Düse 12 in den zentralen Strömungsbereich 19 des Ansaugbereichs 7 und/oder des Mischrohrs 9 ein. Die Düse 12 weist dabei eine innere Ausnehmung in Form eines Strömungsquerschnitts auf, durch die das gasförmige Medium strömen kann, insbesondere vom Dosierventil 10 kommend und in den Ansaugbereich 7 und/oder das Mischrohr 9 einströmend. Dabei trifft das Treibmedium auf das Rezirkulationsmedium, das sich bereits im zentralen Strömungsbereich 19 des Ansaugbereichs 7 und/oder des Mischrohrs 9 befindet. Aufgrund der hohen Geschwindigkeits- und/oder Druck-Differenz zwischen dem Treibmediums und dem Rezirkulationsmedium wird eine innere Reibung und Turbulenzen zwischen den Medien erzeugt. Dabei entsteht eine Scherspannung in der Grenzschicht zwischen dem schnellen Treibmedium und dem wesentlich langsameren Rezirkulationsmedium. Diese Spannung bewirkt eine Impulsübertragung, wobei das Rezirkulationsmedium beschleunigt und mitgerissen wird. Die Mischung geschieht nach dem Prinzip der Impulserhaltung. Dabei wird das Rezirkulationsmedium in der Strömungsrichtung III beschleunigt und es entsteht für das Rezirkulationsmedium ein Druckabfall, wodurch eine Saugwirkung einsetzt und somit weiteres Rezirkulationsmedium aus dem Bereich des ersten Zulaufs 28 nachgefördert wird. Dieser Effekt kann als Strahlpumpeneffekt bezeichnet werden. Durch das Ansteuern der Zu-Dosierung des Treibmediums mittels des Dosierventils 10 kann eine Förderrate des Rezirkulationsmediums reguliert werden und auf den jeweiligen Bedarf eines gesamten Brennstoffzellen-Systems 31 (nicht gezeigt in **Fig.** 1) je nach Betriebszustand und Betriebsanforderungen angepasst werden. In einem beispielhaften Betriebszustand des Förderaggregats 1 bei dem sich das Dosierventil 10 in geschlossenem Zustand befindet, kann verhindert werden, dass das Treibmedium aus dem zweiten Zulauf 36 in den zentralen Strömungsbereich 19 der Strahlpumpe 4 nachströmt, so dass das Treibmedium nicht weiter in Strömungsrichtung III zum Rezirkulationsmedium in den Ansaugbereich 7 und/oder das Mischrohr 9 einströmen kann und somit der Strahlpumpeneffekt aussetzt.

Nach dem Passieren des Mischrohrs 9 strömt das vermischte und zu fördernde Medium, das insbesondere aus dem Rezirkulationsmedium und dem Treibmedium besteht, in der Strömungsrichtung III in den Diffusorbereich 11, wobei es im Diffusorbereich 11 zu einer Reduzierung der Strömungsgeschwindigkeit kommen kann. Von dort strömt das Medium beispielsweise weiter in den Anodenbereich 38 der Brennstoffzelle 32.

Weiterhin weist das Förderaggregat 1 aus der **Fig.** 1 technische Merkmale auf, die den Strahlpumpeneffekt und die Fördereffizienz zusätzlich verbessern und/oder den Kaltstartvorgang und/oder Fertigungs- und Montage-Kosten weiter verbessern. Dabei verläuft das Teilstück Diffusorbereich 11 im Bereich seines inneren Strömungsquerschnitts konisch, insbesondere sich in der Strömungsrichtung III vergrößernd. Durch diese Ausformung des Teilstücks Diffusorbereich 11 kann der vorteilhafte Effekt erzeugt werden, dass die kinetische Energie in Druckenergie umgewandelt wird, wodurch das mögliche Fördervolumen des Förderaggregats 1 weiter erhöht werden kann, wodurch mehr des zu fördernden Mediums, insbesondere H₂, der Brennstoffzelle 32 zugeführt werden kann, wodurch der Wirkungsgrad des gesamten Brennstoffzellen-Systems 31 erhöht werden kann.

Erfindungsgemäß kann das Dosierventil 10 als ein Proportionalventil 10 ausgeführt sein, um eine verbesserte Dosierfunktion und ein exakteres Dosieren des Treibmediums in den Ansaugbereich 7 und/oder das Mischrohr 9 zu ermöglichen. Zur weiteren Verbesserung der Strömungsgeometrie und des Wirkungsgrads des Förderaggregats 1 sind die Düse 12 und das Mischrohr 9 rotationssymetrisch ausgeführt, wobei die Düse 12 koaxial zum Mischrohr 9 der Strahlpumpe 4 verläuft.

**Fig.** 2 zeigt einen in **Fig.** 1 mit X bezeichneten Ausschnitt der Strahlpumpe 4 des Förderaggregats 1 in vergrößerter Darstellung mit einer Gehäuse-Baugruppe 6, die die Bauteile Grundkörper 8 und Mischrohr-Einsatz 17 aufweist. Die Strahlpumpe 4 weist dabei die Düse 12 auf, die in ihrem Inneren rotationssymetrisch um die Längsachse 52 eine innere Strömungsöffnung 20 aufweist, die den zentralen Strömungsbereich 19 und/oder den Ansaugbereich 7 mit dem zweiten Zulauf 36 verbindet und durch die ein Treibmedium strömen kann. Dabei weist die Strahlpumpe 4 eine Gehäuse-Baugruppe 6 auf, wobei die Gehäuse-Baugruppe 6 die Bauteile Grundkörper 8 und Mischrohr-Einsatz 17 aufweist, wobei der Mischrohr-Einsatz 17 derart austauschbar ist, insbesondere bei der Montage, dass mindestens zwei Mischrohr-Einsätze 17 im Grundkörper 8 verbaubar sind. Auf diese Weise lässt sich das Förderaggregat 1 und somit die Strahlpumpe 4 an unterschiedliche Kundenanforderungen und/oder Lastenheftanforderungen derart anpassen, dass nur der Mischrohr-Einsatz 17 ausgetauscht wird, der Grundkörper 8 jedoch für unterschiedliche Kundenforderungen verwendet werden kann, insbesondere im Rahmen eines Baukastenprinzips. Dabei bilden die Bauteile Grundkörper 8 und Mischrohr-Einsatz 17 zusammen zumindest teilweise die Strömungsbereiche Ansaugbereich 7, Mischrohr 9 und Diffusorbereich 11 im Inneren der Strahlpumpe 4 aus, wobei der Mischrohr-Einsatz 17 zumindest nahezu vollständig rotationssymmetrisch um die Längsachse 52 verläuft. Des Weiteren weisen die mindestens zwei Mischrohr-Einsätze 17 einen unterschiedlichen Mischrohrradius 25 und/oder eine unterschiedliche Mischrohrlänge 26 aufweisen, wobei die Mischrohrlänge 26 parallel zur Längsachse 52 verläuft und der Mischrohrradius 25 orthogonal zur Längsachse 52 verläuft. Dabei wird der Mischrohrradius 25 zwischen der Längsachse 52 und einer innenliegenden Wandung 35 des jeweiligen Mischrohr-Einsatzes 17 ausgebildet.

Weiterhin ist in **Fig.** 2 gezeigt, dass der Grundkörper 8 an seinem Innendurchmesser mindestens einen ersten Absatz 13 aufweist und der Mischrohr-Einsatz 17 im Bereich seines Außendurchmessers jeweils mindestens einen zweiten Absatz 14 aufweist. Dabei weist der Mischrohr-Einsatz 17 in dieser beispielhaften Ausführungsform zwei erste Absätze 13 auf. Dabei steht der mindestens eine erste Absatz 13 mit dem zweiten Absatz in Richtung der Längsachse 52 in Anlage. Auf diese Weise kann der Mischrohr-Einsatz 17 bei der Montage derart in Richtung der Längsachse 52 in den Grundkörper 8 eingeschoben werden, bis dieser mit seinem ersten Absatz 13 mit dem zweiten Absatz 14 des Grundkörpers 8 in Anlage steht, wodurch eine korrekte Ausrichtung der Bauteile Grundkörper 8 und Mischrohr-Einsatz 17 zueinander, insbesondere in Richtung der Längsachse 52, gewährleistet werden kann, dass sich die innere Strömungskontur wie erforderlich ausbildet. Eine zusätzliche die erfindungsgemäße Ausgestaltung der Strahlpumpe 4 verbessernde Maßnahme ist die Anordnung mindestens eines Dichtelements 15 zwischen den Absätzen 13, 14 der Bauteile der Strahlpumpe 4.

Aufgrund unterschiedlicher Anforderungen, insbesondere kundenseitig, an das Rezirkulationsvermögen der Strahlpumpe 4 kann es zu einer hohen Varianz an individuellen optimalen Innengeometrie im Bereich des zentralen Strömungsbereichs 19 der Strahlpumpe 4 führen. In vielen Fällen unterscheiden sich die Auslegungen der optimalen Geometrie nur im Bereich des Mischrohres 9 und/oder der direkt angrenzenden Strömungsbereiche Ansaugbereichs 7 und/oder Diffusorbereich 11 gravierend. Deshalb wird ein modularer Aufbau des Förderaggregats 1 vorgeschlagen, bei dem die Varianz im Bereich der Strömungsgeometrie in das Bauteil Mischrohr-Einsatz 17 verlagert wird und der Grundkörper 8 der Strahlpumpe 4 gleichbleibend ausgelegt ist. Dadurch kann die Anzahl an Gleichteilen erhöht werden und somit Kosten, insbesondere Varianz-Kosten reduziert werden. Das Förderaggregat 1 weist beispielsweise somit eine "Plattform"-Gehäuse-Baugruppe mit einem kundenspezifischen Mischrohr-Einsatz 17 auf.

In **Fig.** 2 ist zudem dargestellt, dass in den zentralen Strömungsbereich 19 von außerhalb des Förderaggregats 1 durch den ersten Zulauf 28 ein gasförmiges Rezirkulationsmedium einströmt, insbesondere H₂, wobei das gasförmige Rezirkulationsmedium beispielsweise aus einem Brennstoffzellenstapel gefördert wird. Dieses gasförmige Rezirkulationsmedium strömt in der Strömungsrichtung III zwischen der Düse 12 und dem Grundkörper 8 hindurch in den Ansaugbereich 7 und/oder das Mischrohr 9 ein.

In **Fig.** 3 ist ein in Figur 2 mit XI bezeichneter Ausschnitt der Gehäuse-Baugruppe 6 im Bereich des Mischrohrs 9 mit den Bauteilen Grundkörper 8, Mischrohr-Einsatz 17, Heiz-Element 27 und mindestens einem Dichtelement 15 gezeigt. Dabei kann sich ein Heizelement 27 zwischen dem Grundkörper 8 und dem Mischrohr-Einsatz 17 befindet. Dabei ist gezeigt, dass der Grundkörper 8 den ersten Absatz 13 aufweist und der Mischrohr-Einsatz 17 den zweiten Absatz 14 aufweist, wobei sich das Heiz-Element 27 in der gezeigten beispielhaften Ausführungsform, in Richtung der Längsachse 52 zwischen dem ersten Absatz 13 und dem zweiten Absatz 14 befindet. Das Heizelement 27 kann dabei zumindest nahezu rotationssymetrisch und/oder hülsenförmig umlaufend um die Längsachse 52 verlaufen. Mittels des Heizelements 27 kann die Gefahr der Eisbildung im Förderaggregat 1 insbesondere der Strahlpumpe 4, beispielsweise beim Kaltstart verhindert werden, da das Eis mittels einer Beschickung des Heizelements 27 mit Energie, beispielsweise in Form von elektrischer Energie bei einem elektrischen Heizelement 27, abgetaut werden kann. Außerdem kann beim Kaltstart das Wiederanfrieren von Wasser im sonst kalten Mischrohr verhindert werden. Die Kontaktierung des Heizelements 27 kann beispielsweise durch eine Bohrung im Grundkörper 8 realisiert werden. In der beispielhaften Ausführungsform in Fig. 3 ist dabei gezeigt, dass jeweils ein separates, um die Drehachse 52 umlaufendes Dichtelement 15, das beispielsweise als ein O-Ring 15 ausgeführt sein kann, das Heizelement 27 gegen das gasförmige Medium und/oder andere Flüssigkeiten aus dem zentralen Strömungsbereich 19 der Strahlpumpe 4 kapseln, so dass eine Schädigung beispielsweise von elektrischen Bauteilen verhindert werden kann.

Weiterhin vorteilhaft ist dabei, wenn der Grundkörper 8 und der Mischrohr-Einsatz 17 aus unterschiedlichen Materialien bestehen. In vorteilhafter Weise ist dabei der Mischrohr-Einsatz 17 zumindest teilweise aus einem Material hergestellt ist, welches eine geringe Wärmekapazität und/oder eine hohe Wärmeleitfähigkeit aufweist, insbesondere im Vergleich zum Material des Grundkörpers 8. Auf diese Weise lässt sich ein schnelles Aufheizen des Mischrohr-Einsatzes 17 mittels des Heiz-Elements 27 erzielen, während der Grundkörper 8 nur geringfügig erhitzt wird. Somit lässt sich die Energie zum unnötigen Aufheizen des Grundkörpers 8 reduzieren, da nur die Eisbrücken im Bereich der Oberfläche des Mischrohr-Einsatzes abgebaut werden sollen. Weiterhin vorteilhaft ist zudem wenn der Mischrohr-Einsatz 17 eine hohe Oberflächengüte und/oder geringe Oberflächenrauheit im Bereich des Strömungskanals aufweist, insbesondere im Vergleich zum Grundkörper 8. Die Strömungskonturen, für die eine hohe Oberflächengüte und/oder geringe Oberflächenrauhigkeit weniger Verlustreibung zwischen dem gasförmigen Medium und dem Förderaggregat 1 bedeuten, befinden sich dabei zumindest nahezu ausschließlich im Bereich des Mischrohr-Einsatzes 17. Somit lassen sich die Produktkosten des Förderaggregats 1 reduzieren, während der Wirkungsgrad des Förderaggregats 1 erhöht werden kann.

In **Fig.** 4 ist eine beispielhafte Ausführungsform des Brennstoffzellen-Systems 31 dargestellt, insbesondere eines Anodenkreislaufs. Dabei ist gezeigt, dass das Förderaggregat 1 über eine Verbindungsleitung 29 mit der Brennstoffzelle 32 verbunden ist, die den Anodenbereich 38 und einen Kathodenbereich 40 umfasst. Zudem ist eine Rückführleitung 23 vorgesehen, die den Anodenbereich 38 der Brennstoffzelle 32 mit dem ersten Zulauf 28, und somit insbesondere mit dem Ansaugbereich 7, des Förderaggregats 1 verbindet. Mittels der Rückführleitung 23 kann das im Anodenbereich 38 beim Betrieb der Brennstoffzelle 32 nicht verwertete erste gasförmige Medium zum ersten Zulauf 28 zurückgeführt werden.

Bei diesem ersten gasförmigen Medium handelt es sich insbesondere um das vorrangegangen beschriebene Rezirkulationsmedium.

Wie aus **Fig.** 4 weiter ersichtlich, wird das in dem Tank 34 gespeicherte zweite gasförmige Medium über eine Zuströmleitung 21 einem Zuströmbereich, der insbesondere als der zweite Zulauf 36 ausgebildet ist, des Förderaggregats 1 und/oder der Strahlpumpe 4 zugeführt. Bei diesem zweiten gasförmigen Medium handelt es sich insbesondere um das Treibmedium.

## Patentansprüche

1. Förderaggregat (1) für ein Brennstoffzellen-System (31) zur Förderung und/oder Steuerung eines gasförmigen Mediums, insbesondere Wasserstoff, mit einer von einem Treibstrahl eines unter Druck stehenden gasförmigen Mediums angetriebenen Strahlpumpe (4), wobei ein Ausgang des Förderaggregats (1) mit einem Anodeneingang (5) einer Brennstoffzelle (32) fluidisch verbindbar ist, wobei die Strahlpumpe (4) einen Ansaugbereich (7), ein Mischrohr (9) und einen Diffusorbereich (11) aufweist und vom gasförmigen Medium in einer Strömungsrichtung (III) durchströmt wird, die parallel zu einer Längsachse (52) der Strahlpumpe (4) verläuft und wobei der Diffusorbereich (11) mit dem Anodeneingang (5) einer Brennstoffzelle (32) zumindest mittelbar fluidisch verbindbar ist,
wobei die Strahlpumpe (4) eine Gehäuse-Baugruppe (6) aufweist, wobei die Gehäuse-Baugruppe (6) die Bauteile Grundkörper (8) und Mischrohr-Einsatz (17) aufweist, wobei der Mischrohr-Einsatz (17) derart austauschbar ist, insbesondere bei der Montage, dass mindestens zwei Mischrohr-Einsätze (17) im Grundkörper (8) verbaubar sind, **dadurch gekennzeichnet, dass** sich ein Heizelement (27) zwischen dem Grundkörper (8) und dem Mischrohr-Einsatz (17) befindet.

2. Förderaggregat (1) gemäß Anspruch 1, **dadurch gekennzeichnet, dass** die Bauteile Grundkörper (8) und Mischrohr-Einsatz (17) zusammen zumindest teilweise die Strömungsbereiche Ansaugbereich (7), Mischrohr (9) und Diffusorbereich (11) im Inneren der Strahlpumpe (4) ausbilden, wobei der Mischrohr-Einsatz (17) zumindest nahezu vollständig rotationssymmetrisch um die Längsachse (52) verläuft.

3. Förderaggregat (1) gemäß Anspruch 1 oder 2, **dadurch gekennzeichnet, dass** die mindestens zwei Mischrohr-Einsätze (17) einen unterschiedlichen Mischrohrradius (25) und/oder eine unterschiedliche Mischrohrlänge (26) aufweisen, wobei die Mischrohrlänge (26) parallel zur Längsachse (52) verläuft und der Mischrohrradius (25) orthogonal zur Längsachse (52) verläuft.

4. Förderaggregat (1) gemäß einem der vorrangegangenen Ansprüche, **dadurch gekennzeichnet, dass** der Grundkörper (8) an seinem Innendurchmesser mindestens einen ersten Absatz (13) aufweist und der Mischrohr-Einsatz (17) im Bereich seines Außendurchmessers jeweils mindestens einen zweiten Absatz (14) aufweist.

5. Förderaggregat (1) gemäß einem der vorrangegangenen Ansprüche, **dadurch gekennzeichnet, dass** das Förderaggregat (1) neben der Strahlpumpe (4) ein Dosierventil (10) aufweist, wodurch das Förderaggregat (1) als eine kombinierte Ventil-Strahlpumpenanordnung (3) ausgeführt ist.

6. Förderaggregat (1) gemäß einem der vorrangegangenen Ansprüche, **dadurch gekennzeichnet, dass** der Grundkörper (8) und der Mischrohr-Einsatz (17) aus unterschiedlichen Materialien bestehen.

7. Förderaggregat (1) gemäß Anspruch 6, **dadurch gekennzeichnet, dass** der Mischrohr-Einsatz (17) eine hohe Oberflächengüte und/oder geringe Oberflächenrauhigkeit im Bereich des Strömungskanals aufweist.

8. Förderaggregat (1) gemäß Anspruch 6 oder 7, **dadurch gekennzeichnet, dass** der Mischrohr-Einsatz (17) zumindest teilweise aus einem Material hergestellt ist, welches eine geringe Wärmekapazität und/oder eine hohe Wärmeleitfähigkeit aufweist.

9. Verwendung des Förderaggregates (1) gemäß einem der Ansprüche 1 bis 8 in einem Brennstoffzellen-System 31.

## Claims

1. Feed unit (1) for a fuel cell system (31) for feeding and/or controlling a gaseous medium, in particular hydrogen, having a jet pump (4), which is driven by a motive jet of a pressurized gaseous medium, an outlet of the feed unit (1) being fluidically connectable to an anode inlet (5) of a fuel cell (32), the jet pump (4) having an intake region (7), a mixing pipe (9) and a diffuser region (11), and the gaseous medium flowing through said jet pump in a flow direction (III) which runs parallel to a longitudinal axis (52) of the jet pump (4), and the diffuser region (11) being at least indirectly fluidically connectable to the anode inlet (5) of a fuel cell (32), the jet pump (4) having a housing assembly (6), the housing assembly (6) having the components main body (8) and mixing pipe insert (17), the mixing pipe insert (17) being exchangeable, in particular during the course of assembly, in such a manner that at least two mixing pipe inserts (17) can be installed in the main body (8), **characterized in that** a heating element (27) is situated between the main body (8) and the mixing pipe insert (17).

2. Feed unit (1) according to Claim 1, **characterized in that** the components main body (8) and mixing pipe insert (17) together at least partially form the flow regions intake region (7), mixing pipe (9) and diffuser region (11) in the interior of the jet pump (4), the mixing pipe insert (17) running at least approximately entirely rotationally symmetrically about the longitudinal axis (52).

3. Feed unit (1) according to Claim 1 or 2, **characterized in that** the at least two mixing pipe inserts (17) have a different mixing pipe radius (25) and/or a different mixing pipe length (26), the mixing pipe length (26) running parallel to the longitudinal axis (52), and the mixing pipe radius (25) running orthogonally with respect to the longitudinal axis (52).

4. Feed unit (1) according to one of the preceding claims, **characterized in that** the main body (8) has at least one first shoulder (13) on its inner diameter, and the mixing pipe insert (17) has in each case at least one second shoulder (14) in the region of its outer diameter.

5. Feed unit (1) according to one of the preceding claims, **characterized in that** the feed unit (1) has a dosing valve (10) in addition to the jet pump (4), whereby the feed unit (1) is designed as a combined valve-jet pump arrangement (3).

6. Feed unit (1) according to one of the preceding claims, **characterized in that** the main body (8) and the mixing pipe insert (17) are composed of different materials.

7. Feed unit (1) according to Claim 6, **characterized in that** the mixing pipe insert (17) has a high surface quality and/or low surface roughness in the region of the flow channel.

8. Feed unit (1) according to Claim 6 or 7, **characterized in that** the mixing pipe insert (17) is produced at least partially from a material that has a low heat capacity and/or a high thermal conductivity.

9. Use of the feed unit (1) according to one of Claims 1 to 8 in a fuel cell system (31).

## Revendications

1. Unité de transport (1) pour un système de piles à combustible (31) pour le transport et/ou la commande d'un milieu gazeux, notamment d'hydrogène, avec une pompe à jet (4) entraînée par un jet propulseur d'un milieu gazeux sous pression, une sortie de l'unité de transport (1) pouvant être reliée fluidiquement à une entrée d'anode (5) d'une pile à combustible (32), la pompe à jet (4) présentant une zone d'aspiration (7), un tube de mélange (9) et une zone de diffusion (11) et étant traversée par le milieu gazeux dans une direction d'écoulement (III), qui s'étend parallèlement à un axe longitudinal (52) de la pompe à jet (4) et la zone de diffusion (11) pouvant être reliée fluidiquement au moins indirectement à l'entrée d'anode (5) d'une pile à combustible (32), la pompe à jet (4) présentant un sous-ensemble de boîtier (6), le sous-ensemble de boîtier (6) présentant les composants corps de base (8) et insert de tube de mélange (17), l'insert de tube de mélange (17) étant interchangeable, notamment lors du montage, de telle sorte qu'au moins deux inserts de tube de mélange (17) peuvent être montés dans le corps de base (8), **caractérisée en ce qu'**un élément chauffant (27) se trouve entre le corps de base (8) et l'insert de tube de mélange (17) .

2. Unité de transport (1) selon la revendication 1, **caractérisée en ce que** les composants corps de base (8) et insert de tube de mélange (17) forment ensemble au moins partiellement les zones d'écoulement zone d'aspiration (7), tube de mélange (9) et zone de diffusion (11) à l'intérieur de la pompe à jet (4), l'insert de tube de mélange (17) s'étendant au moins presque entièrement à symétrie de révolution autour de l'axe longitudinal (52).

3. Unité de transport (1) selon la revendication 1 ou 2, **caractérisée en ce que** les au moins deux inserts de tube de mélange (17) présentent un rayon de tube de mélange (25) différent et/ou une longueur de tube de mélange (26) différente, la longueur de tube de mélange (26) s'étendant parallèlement à l'axe longitudinal (52) et le rayon de tube de mélange (25) s'étendant orthogonalement à l'axe longitudinal (52).

4. Unité de transport (1) selon l'une quelconque des revendications précédentes, **caractérisée en ce que** le corps de base (8) présente au moins un premier épaulement (13) sur son diamètre intérieur et l'insert de tube de mélange (17) présente respectivement au moins un deuxième épaulement (14) dans la zone de son diamètre extérieur.

5. Unité de transport (1) selon l'une quelconque des revendications précédentes, **caractérisée en ce que** l'unité de transport (1) présente une soupape de dosage (10) en plus de la pompe à jet (4), l'unité de transport (1) étant ainsi réalisée sous la forme d'un agencement soupape-pompe à jet combiné (3).

6. Unité de transport (1) selon l'une quelconque des revendications précédentes, **caractérisée en ce que** le corps de base (8) et l'insert de tube de mélange (17) sont constitués de matériaux différents.

7. Unité de transport (1) selon la revendication 6, **caractérisée en ce que** l'insert de tube de mélange (17) présente une qualité de surface élevée et/ou une faible rugosité de surface dans la zone du canal d'écoulement.

8. Unité de transport (1) selon la revendication 6 ou 7, **caractérisée en ce que** l'insert de tube de mélange (17) est au moins partiellement fabriqué dans un matériau qui présente une faible capacité thermique et/ou une conductivité thermique élevée.

9. Utilisation de l'unité de transport (1) selon l'une quelconque des revendications 1 à 8 dans un système de pile à combustible 31.
